# EUROPÄISCHE PATENTSCHRIFT

(11) **EP 3 460 556 B1**
(45) Veröffentlichungstag und Bekanntmachung des Hinweises auf die Patenterteilung: **24.03.2021**
(21) Anmeldenummer: 18196032.9
(22) Anmeldetag: 21.09.2018
(51) Int. Cl.: G02B 7/12, G02B 23/18

(54) **DREHGELENK FÜR EIN FERNOPTISCHES INSTRUMENT**
ROTATING JOINT FOR A REMOTE OPTICAL INSTRUMENT
ARTICULATION ROTATIVE POUR UN INSTRUMENT OPTIQUE D'OBSERVATION

(30) Priorität: 22.09.2017 AT 508072017
(43) Veröffentlichungstag der Anmeldung: 27.03.2019
(73) Patentinhaber: Swarovski-Optik KG., 6067 Absam (AT)
(72) Erfinder: LEITNER, Matthias, 6069 Gnadenwald (AT)
(74) Vertreter: Burger, Hannes

(56) Entgegenhaltungen:
- DD-A1- 148 108
- DE-A1- 2 358 697
- DE-A1- 2 843 877
- GB-A- 1 427 004
- GB-A- 2 106 586

## Beschreibung

Die Erfindung betrifft ein Drehgelenk für ein fernoptisches Instrument, insbesondere Binokular, gemäß dem Oberbegriff des Anspruch 1. Die Erfindung betrifft auch ein fernoptisches Instrument, insbesondere Binokular, mit einem ersten Tubus und einem zweiten Tubus, die durch ein Drehgelenk miteinander verbunden und gegeneinander verschwenkbar sind.

Die DD148108A1 offenbart ein Knickgelenk für binokulare Fernrohre, deren Gehäuseteile mit Gelenkaugen versehen sind, durch welche eine starre Achse gelagert ist. Die Achse ist so gestaltet, dass sich an beiden Enden je ein Spreizstück befindet, das durch eine Schraube gespreizt wird. Diese Spreizstücke sind jeweils innerhalb der äußeren Gelenkaugen des Fernrohres angeordnet. Das Drehmoment des Knickgelenkes kann durch das Anziehen der Schraube ein- bzw. nachgestellt werden.

Im Stand der Technik ist es bekannt, den Schwenkwiderstand zwischen zwei Gelenkteilen eines Binokulars mittels einer Klemmung, die eine durchgängige Schraube und zwei Kontermuttern umfasst, einzustellen. Der Nachteil einer solchen Lösung besteht darin, dass sich die Klemmkraft (und damit auch der Schwenkwiderstand) durch das Kontern, aber auch nach mehrmaligem Öffnen und Schließen des Gelenks ungewollt verändern kann. Daher ist mit einer solchen Klemmung eine genaue und dauerhafte Einstellung des Schwenkwiderstandes nicht möglich. Außerdem erfordert eine solche Klemmung, insbesondere aufgrund der Kontermuttern, viel Bauraum.

Aufgabe der vorliegenden Erfindung war es, die Nachteile des Standes der Technik zu überwinden und ein Drehgelenk zur Verfügung zu stellen, bei dem die Einstellung des Schwenkwiderstandes oder einer Rastung zwischen den Gelenkteilen genau und dauerhaft erfolgen kann. Insbesondere soll die vorgenommene Einstellung auch nach mehrmaligem Verschwenken der Gelenteile zueinander über einen längeren Zeitraum unverändert bleiben. Die Einstellvorrichtung soll sich darüber hinaus durch geringeren Platzbedarf auszeichnen.

Diese Aufgabe wird mit einem eingangs erwähnten Drehgelenk dadurch gelöst, dass die Einstellvorrichtung
- eine Spreizeinrichtung mit zumindest einem entlang der Schwenkachse verstellbaren Spreizelement und
- zumindest eine mit der Spreizeinrichtung zusammenwirkende Kraftübertragungsfläche zur Umsetzung der Spreizkraft der Spreizeinrichtung in eine von der Einstellvorrichtung auf zumindest einen Gelenkteil (vorzugsweise auf beide Gelenkteile) in Richtung der Schwenkachse wirkende Kraft
umfasst, wobei die Kraftübertragungsfläche eine relativ zur Schwenkachse schräge oder gekrümmte Fläche umfasst und/oder einen in axialer Richtung abnehmenden Normalabstand zur Schwenkachse aufweist.

Durch eine Verstellung des Spreizelementes kann die von der Spreizeinrichtung - direkt oder indirekt - auf die Kraftübertragungsfläche wirkende Kraft eingestellt und/oder eine Verschiebung der Kraftübertragungsfläche relativ zur Spreizeinrichtung bewirkt werden. In beiden Fällen kann die Einstellvorrichtung so ausgebildet sein, dass die Kraftübertragungsfläche durch die Spreizeinrichtung in eine axiale Richtung gedrängt wird. Dadurch kann jener Teil, an dem die Kraftübertragungsfläche ausgebildet ist, mit Kraft beaufschlagt und/oder verstellt werden.

Die Verwendung einer Spreizeinrichtung, die gegen die Kraftübertragungsfläche wirkt, kann hinsichtlich des Drehmoments eine Entkopplung zwischen den gegeneinander verschwenkbaren Gelenkteilen und dem entlang der Schwenkachse verstellbaren Spreizelement (bzw. einem auf das Spreizelement wirkenden Stellelement) erzielt werden. Die Einstellvorrichtung bzw. eine mittels der Einstellvorrichtung vorgenommene Einstellung kann auch durch wiederholtes Verschwenken der Gelenkteile nicht verstellt werden. Außerdem kann der erforderliche Bauraum verringert werden, da nunmehr keine Kontermuttern mehr erforderlich sind.

Die zumindest eine Kraftübertragungsfläche ist zur Umsetzung der Spreizkraft der Spreizeinrichtung in eine von der Einstellvorrichtung auf zumindest einen Gelenkteil, vorzugsweise auf beide Gelenkteile, wirkende Kraft (z.B. Klemmkraft oder Zustellkraft) ausgebildet. Vorzugsw eise wird dabei eine von einem Gelenkteil auf den anderen Gelenkteil wirkende Kraft erzeugt. Diese kann direkt oder indirekt - z.B. über zumindest ein Zwischen- und/oder Übertragungselement oder z.B. auch über zumindest einen Teil der Einstellvorrichtung selbst - von einem Gelenkteil auf den anderen Gelenkteil wirken. Mit anderen Worten: Durch Vermittlung bzw. Einstellung der Einstellvorrichtung kann eine von einem Gelenkteil auf den anderen Gelenkteil wirkende Kraft erzeugt werden. Die von einem Gelenkteil auf den anderen Gelenkteil wirkende Kraft ist insbesondere eine Kraft, die die Gelenkteile - vorzugsweise in Richtung der Schwenkachse - zueinander drückt oder zueinander bewegt.

Das fernoptische Instrument ist vorzugsweise ein Fernrohr mit zumindest zwei Tubussen. Unter einem fernoptischen Instrument wird insbesondere eine Einrichtung verstanden, die zur Beobachtung eines Objektes geeignet ist, das zumindest zwei Meter, vorzugsweise zumindest 10 Meter, besonders bevorzugt zumindest 100 Meter von dem fernoptischen Instrument (bzw. dem Beobachter) entfernt ist. Fernoptische Instrumente dienen insbesondere der Vergrößerung des Sehwinkels von entfernten Objekten.

Eine bevorzugte Ausführungsform zeichnet sich dadurch aus, dass die Spreizeinrichtung zumindest einen durch das Spreizelement spreizbaren, insbesondere aufspreizbaren Abschnitt aufweist, der im gespreizten Zustand gegen die zumindest eine Kraftübertragungsfläche drückt. Hier wirkt die Spreizeinrichtung direkt auf die Kraftübertragungsfläche. Es ist bevorzugt, wenn die Richtung der gegen die Kraftübertragungsfläche wirkenden Kraft der Spreizeinrichtung eine - bezogen auf die Schwenkachse - radiale Komponente aufweist.

Eine bevorzugte Ausführungsform zeichnet sich dadurch aus, dass das Spreizelement innerhalb des spreizbaren Abschnittes angeordnet ist. Der spreizbare Abschnitt wird dabei - je nach Position des Spreizelementes - mehr oder weniger stark - insbesondere radial - nach außen gespreizt. Bevorzugt ist das Spreizelement spielfrei in den spreizbaren Abschnitt eingesetzt.

Eine bevorzugte Ausführungsform zeichnet sich dadurch aus, dass der spreizbare Abschnitt zumindest zwei, vorzugsweise zumindest vier Spreizfinger aufweist, die um die Schwenkachse angeordnet sind. Dadurch kann eine - bezogen auf die Schwenkachse - gleichmäßige Spreizkraft aufgebracht werden.

Eine bevorzugte Ausführungsform zeichnet sich dadurch aus, dass die Kraftübertragungsfläche radial außerhalb des spreizbaren Abschnittes angeordnet ist. Die Kraftübertragungsfläche bildet hier eine radiale Begrenzung für den spreizbaren Abschnitt. Die Kraftübertragungsfläche ist dabei derart ausgebildet bzw. orientiert, dass jener Teil, an dem die Kraftübertragungsfläche ausgebildet ist, aufgrund der Spreizkraft in eine axiale Richtung gedrängt wird.

Eine bevorzugte Ausführungsform zeichnet sich dadurch aus, dass die Kraftübertragungsfläche eine relativ zur Schwenkachse schräge oder gekrümmte Fläche, vorzugsweise eine Keilfläche und/oder eine Kegelfläche und/oder eine Kugelfläche, umfasst. Durch diese Maßnahme kann die von der Spreizeinrichtung auf die Kraftübertragungsfläche wirkende Kraft "umgelenkt" werden, insbesondere in eine Kraft, die in axialer Richtung wirkt.

Eine bevorzugte Ausführungsform zeichnet sich dadurch aus, dass die Kraftübertragungsfläche vorzugsweise symmetrisch um die Schwenkachse angeordnet ist. Die Kraftübertragung kann hier unabhängig von der Drehstellung (um die Schwenkachse) zwischen Kraftübertragungsfläche und Spreizeinrichtung erfolgen.

Eine bevorzugte Ausführungsform zeichnet sich dadurch aus, dass die Kraftübertragungsfläche ausgebildet ist, die durch die Spreizeinrichtung, insbesondere durch den spreizbaren Abschnitt, ausgebübte Kraft in eine Kraft und/oder Bewegung entlang der Schwenkachse umzusetzen.

Eine bevorzugte Ausführungsform zeichnet sich dadurch aus, dass die Einstellvorrichtung einen ersten Teil und einen zweiten Teil umfasst, wobei die Spreizeinrichtung an dem ersten Teil ausgebildet ist und die Kraftübertragungsfläche an dem zweiten Teil ausgebildet ist. Der erste Teil und der zweite Teil wirken mit den Gelenkteilen zusammen. Dabei wird eine zwischen dem ersten Teil und dem zweiten Teil (aufgrund der Verstellung des Spreizelementes) wirkende Kraft auf die Gelenkteile übertragen.

Eine bevorzugte Ausführungsform zeichnet sich dadurch aus, dass der erste Teil und der zweite Teil in Richtung der Schwenkachse gegeneinander verstellbar sind und/oder dass der erste Teil und der zweite Teil um die Schwenkachse gegeneinander verdrehbar sind. Durch eine axiale Verstellbarkeit kann eine in axialer Richtung wirkende (Klemm-)Kraft auf die Gelenkteile übertragen werden, wodurch z.B. die Reibkraft zwischen den Gelenkteilen einstellbar ist. Durch die relative Verdrehbarkeit kann der erste Teil mit einem der Gelenkteile drehfest verbunden sein und der zweite Teil mit dem anderen Gelenkteil drehfest verbunden sein. Dadurch wird die Anbindung und somit die Kraftübertragung von den Teilen der Einstellvorrichtung auf die Gelenkteile verbessert.

Eine bevorzugte Ausführungsform zeichnet sich dadurch aus, dass der zweite Teil einen hülsenförmigen Abschnitt aufweist und dass die Spreizeinrichtung zumindest teilweise in den hülsenförmigen Abschnitt eingesetzt ist und dass die Kraftübertragungsfläche an einer Innenwand des hülsenförmigen Abschnitts ausgebildet ist. Dies erlaubt eine besonders platzsparende Konstruktion und eine besonders definierte Verstellung der Spreizeinrichtung.

Eine bevorzugte Ausführungsform zeichnet sich dadurch aus, dass erste Teil und der zweite Teil die Gelenksachse für die Gelenkteile bilden und sich durch die Gelenkteile hindurch erstrecken. Damit übernimmt die Einstellvorrichtung eine weitere Funktion und können dadurch Bauteile eingespart werden.

Eine bevorzugte Ausführungsform zeichnet sich dadurch aus, dass die Kraftübertragungsfläche einen in axialer Richtung, vorzugsweise in Richtung vom zweiten Teil zum ersten Teil, abnehmenden Normalabstand zur Schwenkachse aufweist. Durch Aufspreizen des spreizbaren Abschnittes werden in dieser Ausführungsform die beiden Teile der Einstellvorrichtung zueinander gedrängt, weil die Kraftübertragungsfläche dem Druck des spreizbaren Abschnittes ausweicht.

Eine bevorzugte Ausführungsform zeichnet sich dadurch aus, dass das Spreizelement mit einem Stellelement, insbesondere einer Stellschraube, über Kontaktflächen zusammenwirkt, wobei die Kontaktfläche des Stellelementes und/oder die Kontaktfläche des Spreizelementes konvex, vorzugsweise kugelförmig, ausgebildet ist/sind. Durch diese Maßnahme wird eine vollständige Drehmomententkopplung zwischen den Gelenkteilen und dem Stellelement hergestellt.

Eine bevorzugte Ausführungsform zeichnet sich dadurch aus, dass das Spreizelement eine zur Schwenkachse rotationssymmetrische Fläche, vorzugsweise eine kugelförmige oder konische Fläche, aufweist. Die Spreizkraft bleibt dabei unabhängig von der Relativdrehstellung zwischen Spreizeinrichtung und Kraftübertragungsfläche.

Eine bevorzugte Ausführungsform zeichnet sich dadurch aus, dass das Spreizelement eine Kugel ist.

Eine bevorzugte Ausführungsform zeichnet sich dadurch aus, dass die Einstellvorrichtung einen Betätigungsabschnitt aufweist, mittels dessen das Spreizelement entlang der Schenkachse verstellbar ist, wobei vorzugsweise der Betätigungsabschnitt an einem mit dem Spreizelement zusammenwirkenden Stellelement, insbesondere einer Stellschraube, oder direkt an dem Spreizelement ausgebildet ist. Der Betätigungsabschnitt weist vorzugsweise eine an der Stirnfläche einer Stellschraube ausgebildete - insbesondere vertiefte - Form, z.B. ein (Kreuz-) Schlitz, eine Sechskantform, Innensechsrund, etc.) auf, die mit einem entsprechenden Schraubendreher in Eingriff gebracht und verstellt werden kann.

Eine bevorzugte Ausführungsform zeichnet sich dadurch aus, dass der Betätigungsabschnitt von außerhalb des Drehgelenkes zugänglich ist oder hinter einer abnehmbaren Abdeckung angeordnet ist. Dadurch kann der Benutzer selbst die Einstellung des Schwenkwiderstandes bzw. der Rastung vornehmen und ist nicht von den werksseitigen (Vor-)Einstellungen abhängig.

Eine bevorzugte Ausführungsform zeichnet sich dadurch aus, dass der Betätigungsabschnitt an der Stirnseite einer Stellschraube ausgebildet ist und/oder dass der Betätigungsabschnitt durch die Schwenkachse geschnitten wird.

Eine bevorzugte Ausführungsform zeichnet sich dadurch aus, dass die Einstellvorrichtung eine Klemm- oder Zustellvorrichtung ist, wobei die Gelenkteile durch eine von der Klemm- oder Zustellvorrichtung auf die Gelenkteile in Richtung der Schwenkachse wirkende, mittels der Spreizeinrichtung einstellbare Kraft zueinander drückbar oder zueinander bewegbar sind. Durch eine Klemmkraft kann der Reibungswiderstand und daher der Schwenkwiderstand gezielt eingestellt werden. Durch eine Zustellung der Gelenkteile zueinander, kann auch eine zwischen den Gelenkteilen ausgebildete Rastung hergestellt (Herstellung eines Rasteingriffs) oder eingestellt (Einstellung des Rastwiderstandes) werden.

Eine bevorzugte Ausführungsform zeichnet sich dadurch aus, dass eine erste Klemmfläche, die vorzugsweise im Wesentlichen senkrecht zur Schwenkachse steht, an dem ersten Teil der Einstellvorrichtung ausgebildet ist und eine zweite Klemmfläche, die vorzugsweise im Wesentlichen senkrecht zur Schwenkachse steht, an dem zweiten Teil der Einstellvorrichtung ausgebildet ist, wobei die Gelenkteile zwischen der ersten Klemmfläche und der zweiten Klemmfläche angeordnet sind. Vorzugsweise liegt die erste Klemmfläche an einem der Gelenkteile und die zweite Klemmfläche an dem anderen Gelenkteil an.

Eine bevorzugte Ausführungsform zeichnet sich dadurch aus, dass die Gelenkteile durch zumindest eine Feder, vorzugsweise eine Tellerfeder, in axialer Richtung beaufschlagt sind, wobei vorzugsweise die zumindest eine Feder zwischen dem ersten Teil und dem zweiten Teil der Einstellvorrichtung angeordnet ist. Die Feder dient zur Verminderung des (Lager-)Spiels zwischen den Gelenkteilen. Für den Fall, dass die Einstellvorrichtung eine Klemmvorrichtung ist, die die Gelenkteile (in Richtung der Schwenkachse) zueinander drückt, kann die Feder dabei entgegen der Klemmkraft der Klemmvorrichtung wirken.

Eine bevorzugte Ausführungsform zeichnet sich dadurch aus, dass durch die Einstellvorrichtung der Reibungswiderstand zwischen den Gelenkteilen einstellbar ist.

Eine bevorzugte Ausführungsform zeichnet sich dadurch aus, dass das Drehgelenk eine Rastung aufweist, durch die die Gelenkteile in verschiedenen Schwenkpositionen zueinander festlegbar sind, wobei durch die Einstellvorrichtung der Rastwiderstand einstellbar ist und/oder die Rastteile der Rastung in Eingriff bringbar sind.

Die Aufgabe wird auch gelöst durch ein fernoptisches Instrument, insbesondere Binokular, mit einem ersten Tubus und einem zweiten Tubus, die durch ein erfindungsgemäßes Drehgelenk miteinander verbunden und gegeneinander verschwenkbar sind.

Eine bevorzugte Ausführungsform zeichnet sich dadurch aus, dass die Einstellvorrichtung einen Betätigungsabschnitt aufweist, mittels dessen das Spreizelement entlang der Schenkachse verstellbar ist, und dass der Betätigungsabschnitt von außerhalb des fernoptischen Instruments zugänglich ist oder hinter einer abnehmbaren Abdeckung angeordnet ist. Damit ist eine Einstellung auch durch den Benutzer auf unkomplizierte Weise möglich.

Eine bevorzugte Ausführungsform zeichnet sich dadurch aus, dass die Gelenkteile eine Brücke zwischen dem ersten Tubus und dem zweiten Tubus bilden und dass das fernoptische Instrument ein Fokussierbetätigungselement aufweist, wobei der Betätigungsabschnitt der Einstellvorrichtung und das Fokussierbetätigungselement an gegenüberliegenden Seiten der Brücke angeordnet sind und vorzugsweise durch die Schwenkachse geschnitten werden. Dies erlaubt ein platzsparendes Design und die Konzentration der Betätigungsmöglichkeiten in einen gemeinsamen Bereich.

Zum besseren Verständnis der Erfindung wird diese anhand der nachfolgenden Figuren näher erläutert.

Es zeigen jeweils in stark vereinfachter, schematischer Darstellung:
- Fig. 1: ein fernoptisches Instrument in Form eines Binokulars;
- Fig. 2: eine Ausführungsform einer Einstellvorrichtung zum Einstellen des Schwenkwiderstandes oder einer Rastung zwischen den Gelenkteilen;
- Fig. 3: eine Ausführungsform eines erfindungsgemäßen Drehgelenkes;
- Fig. 4: die Umsetzung der Spreizkraft in eine zwischen den Gelenkteilen wirkende Kraft;
- Fig. 5: die Einstellvorrichtung aus Fig. 2 in perspektivischer Ansicht von außen;
- Fig. 6: die Einstellvorrichtung aus Fig. 5 von oben;
- Fig. 7: eine Ausführungsform des Drehgelenks mit einer Rastung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

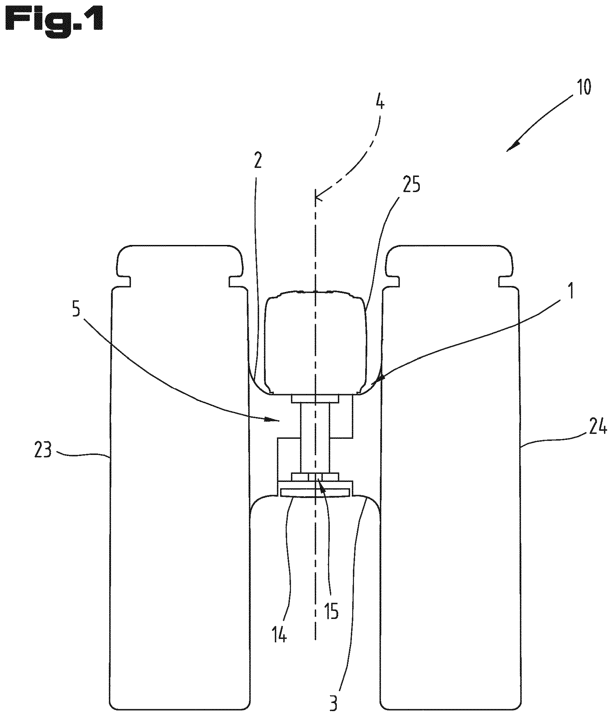

Fig. 1 zeigt als fernoptisches Instrument 10 ein Fernrohr in Form eines Binokulars mit einem ersten Tubus 23 und einem zweiten Tubus 24, die durch ein Drehgelenk 1 miteinander verbunden und somit um die Schwenkachse 4 des Drehgelenks gegeneinander verschwenkbar sind.

Das Drehgelenk 1 umfasst um eine Schwenkachse 4 gegeneinander verschwenkbare Gelenkteile 2, 3. Dabei ist jedem Tubus 23, 24 ein Gelenkteil 2, 3 zugeordnet. Mit einer Einstellvorrichtung 5, die mit den Gelenkteilen 2, 3 zusammenwirkt, ist der Schwenkwiderstand und/oder eine Rastung 26 zwischen den Gelenkteilen 2, 3 einstellbar.

In einem Anwendungsfall kann durch die Einstellvorrichtung 5 z.B. der Reibungswiderstand (und damit der Schwenkwiderstand) zwischen den Gelenkteilen 2, 3 eingestellt werden.

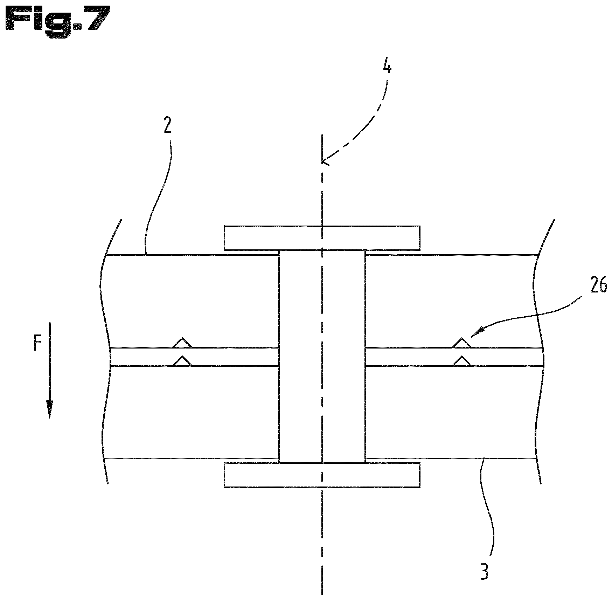

In einem anderen Anwendungsfall weist das Drehgelenk 1 eine Rastung 26 auf (Fig. 7), durch die die Gelenkteile 2, 3 in verschiedenen Schwenkpositionen zueinander festlegbar sind. Durch die Einstellvorrichtung 5 ist dann z.B. der Rastwiderstand einstellbar und/oder sind die Rastteile der Rastung 26 in Eingriff bringbar bzw. wieder lösbar.

In der bevorzugten Ausführungsform der Fig. 1 weist die Einstellvorrichtung 5 einen Betätigungsabschnitt 15 (z.B. eine an der Stirnfläche einer Stellschraube ausgebildete - insbesondere vertiefte - Form, z.B. ein (Kreuz-) Schlitz, eine Sechskantform, Innensechsrund, etc.) auf, durch den die vorgenannten Einstellungen durch einen Benutzer vorgenommen werden können.

Der Betätigungsabschnitt 15 kann von außerhalb des fernoptischen Instruments 10 zugänglich sein bzw. - wie in Fig. 1 dargestellt - hinter einer abnehmbaren (z.B. aufklappbaren oder gänzlich entfernbaren) Abdeckung 14 (z.B. in Form einer Kappe) angeordnet sein.

Wie aus Fig. 1 zu sehen bilden die Gelenkteile 2, 3 eine Brücke zwischen dem ersten Tubus 23 und dem zweiten Tubus 24. Das fernoptische Instrument 10 weist auch ein Fokussierbetätigungselement 25 zum Fokussieren der fernoptischen Einrichtung 10 auf. In der bevorzugten Ausführungsform der Fig. 1 sind der Betätigungsabschnitt 15 der Einstellvorrichtung 5 und das Fokussierbetätigungselement 25 an gegenüberliegenden Seiten der Brücke angeordnet und werden durch die Schwenkachse 4 geschnitten.

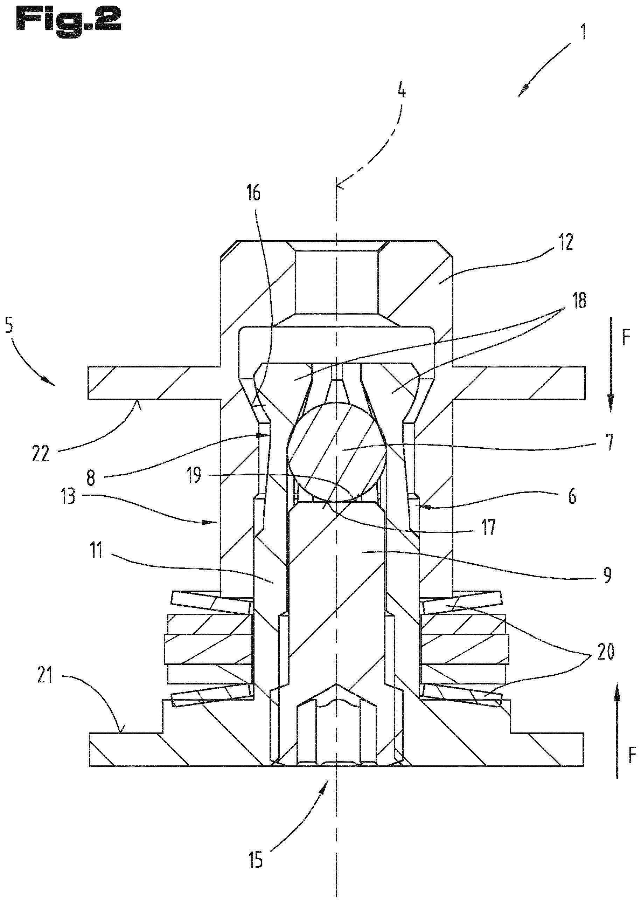

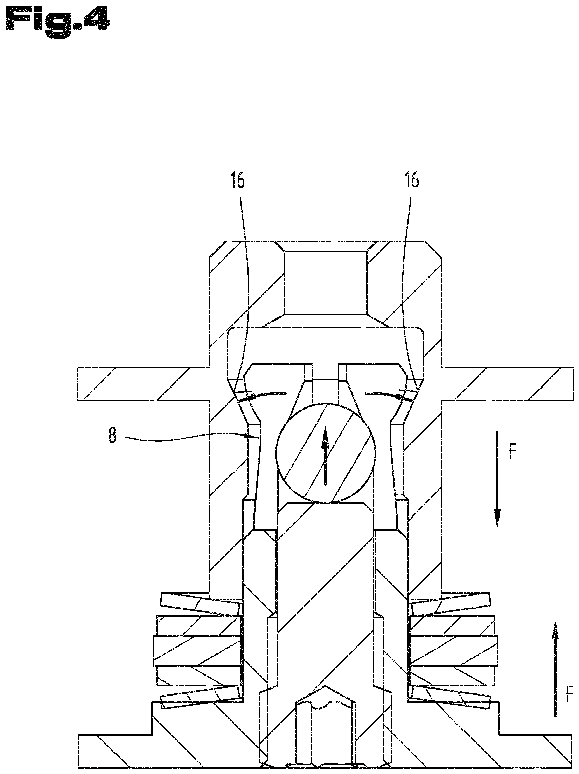

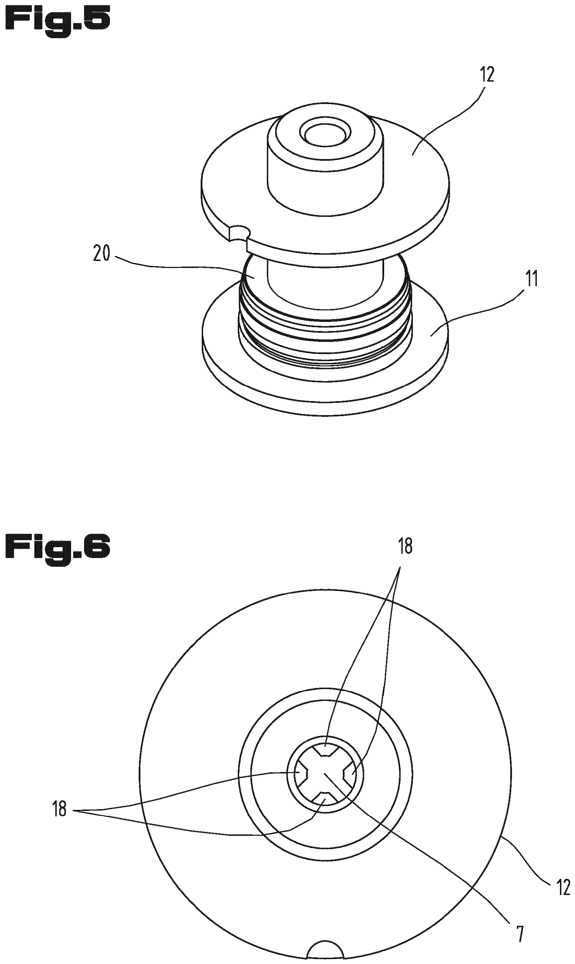

Anhand der Fig. 2-4 wird die Einstellvorrichtung 5 im Detail beschrieben. Fig. 5 und 6 zeigen ergänzend eine perspektivische Ansicht und eine Ansicht von oben. Die Einstellvorrichtung 5 umfasst eine Spreizeinrichtung 6 mit einem entlang der Schwenkachse 4 verstellbaren Spreizelement 7 - hier in Form einer Kugel - und eine mit der Spreizeinrichtung 6 zusammenwirkende Kraftübertragungsfläche 16. Die Kraftübertragungsfläche 16 ist zur Umsetzung der Spreizkraft der Spreizeinrichtung 6 in eine von der Einstellvorrichtung auf zumindest einen der Gelenkteile 2, 3, vorzugsweise auf beide Gelenkteile 2, 3, wirkende Kraft F ausgebildet (siehe den in Fig. 4 dargestellten Kraftverlauf). In einem bevorzugten Anwendungsfall wird dabei die Spreizkraft der Spreizeinrichtung 6 in eine von einem Gelenkteil 3 auf den anderen Gelenkteil 2 wirkende Kraft umgesetzt.

Die Spreizeinrichtung 6 weist einen durch das Spreizelement 7 spreizbaren, insbesondere aufspreizbaren Abschnitt 8 auf, der im gespreizten Zustand gegen die Kraftübertragungsfläche 16 drückt. Durch die besondere Ausbildung der Kraftübertragungsfläche 16 - hier mit einer schrägen Orientierung zur Schwenkachse 4 - wird diese durch den radial spreizbaren Abschnitt 8 nach unten "verdrängt".

Das Spreizelement 7 ist innerhalb des spreizbaren Abschnittes 8 angeordnet und spreizt den Abschnitt 8 auf. In der dargestellten Ausführungsform weist der spreizbare Abschnitt 8 vier Spreizfinger 18 auf, die um die Schwenkachse 4 angeordnet sind (siehe auch Fig. 6).

Die Kraftübertragungsfläche 16 ist radial außerhalb des spreizbaren Abschnittes 8 angeordnet und umfasst eine relativ zur Schwenkachse 4 schräge (oder alternativ gekrümmte) Fläche, vorzugsweise eine Keilfläche und/oder eine Kegelfläche und/oder eine Kugelfläche. Die Kraftübertragungsfläche 16 ist um die Schwenkachse 4 angeordnet und ist in der dargestellten Ausführungsform symmetrisch zur Schwenkachse 4 ausgebildet.

Wie insbesondere aus Fig. 4 zu sehen ist die Kraftübertragungsfläche 16 ausgebildet, die durch die Spreizeinrichtung 6, insbesondere durch den spreizbaren Abschnitt 8, ausgebübte Kraft in eine Kraft F (bzw. Kraft und Gegenkraft) und/oder Bewegung entlang der Schwenkachse 4 umzusetzen. Durch Bewegen des Spreizelementes 7 entlang der Schwenkachse 4 wird der Abschnitt 8 - in vorliegendem Fall die Spreizfinger 18 - radial nach außen und somit gegen die Kraftübertragungsfläche 16 gedrückt. Aufgrund der besonderen Ausbildung der Kraftübertragungsfläche 16 wird die Spreizkraft "umgelenkt" bzw. in eine entlang der Schwenkachse 4 wirkende Kraft F umgewandelt.

Wie aus Fig. 2 zu sehen umfasst die Einstellvorrichtung 5 einen ersten Teil 11 und einen zweiten Teil 12. Dabei ist die Spreizeinrichtung 6 an dem ersten Teil 11 und die Kraftübertragungsfläche 16 an dem zweiten Teil 12 ausgebildet.

Der erste Teil 11 und der zweite Teil 12 sind in Richtung der Schwenkachse 4 gegeneinander verstellbar und vorzugsweise auch um die Schwenkachse 4 gegeneinander verdrehbar.

In der dargestellten bevorzugten Ausführungsform weist der zweite Teil 12 einen hülsenförmigen Abschnitt 13 auf. Die Spreizeinrichtung 6 ist zumindest teilweise in den hülsenförmigen Abschnitt 13 eingesetzt ist. Die Kraftübertragungsfläche 16 ist an einer Innenwand des hülsenförmigen Abschnitts 13 ausgebildet.

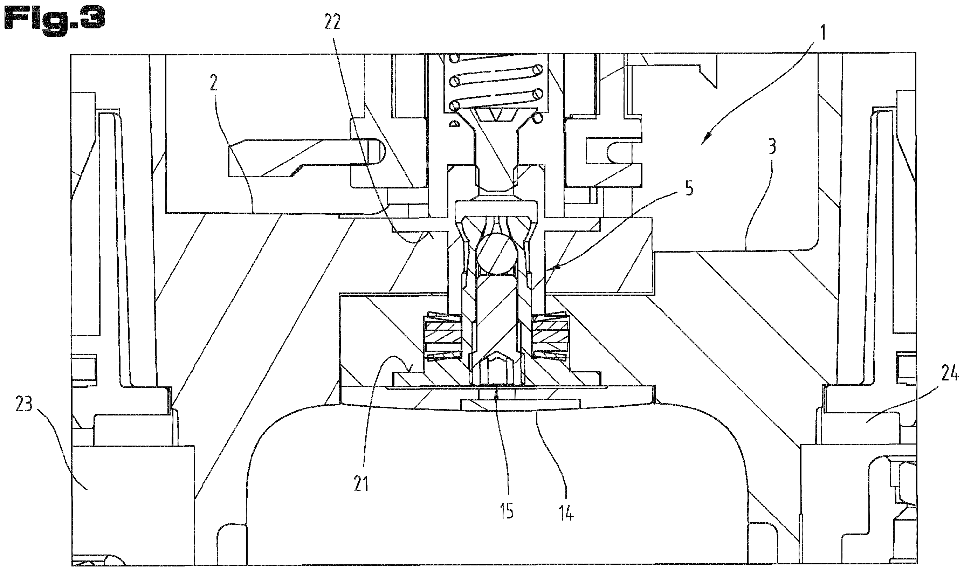

Wie aus Fig. 3, welche das gesamte Drehgelenk 1 zeigt, bilden der erste Teil 11 und der zweite Teil 12 die Gelenksachse für die Gelenkteile 2, 3 und erstrecken sich durch die Gelenkteile 2, 3 hindurch.

Wie bereits weiter oben angedeutet, weist die Kraftübertragungsfläche 16 einen in axialer Richtung, vorzugsweise in Richtung vom zweiten Teil 12 zum ersten Teil 11, abnehmenden Normalabstand zur Schwenkachse 4 auf.

Im Folgenden wird eine bevorzugte Betätigungsart des Spreizelementes näher beschrieben. Das Spreizelement 7 kann mit einem Stellelement 9 (hier: einer Stellschraube) über Kontaktflächen 17, 19 zusammenwirken. Die Kontaktfläche 17 des Spreizelementes 7 ist konvex, hier kugelförmig, ausgebildet. Zusätzlich oder alternativ kann auch die Kontaktfläche 19 des Stellelementes 9 konvex ausgebildet sein.

Das Spreizelement 7 kann eine zur Schwenkachse 4 rotationssymmetrische Fläche, vorzugsweise eine kugelförmige oder konische Fläche, aufweisen. Eine rotationssymmetrische Fläche kann beispielsweise mit dem spreizbaren Abschnitt 8 und/oder mit dem Stellelement 9 zusammenwirken.

Wie bereits erwähnt kann die Einstellvorrichtung 5 einen Betätigungsabschnitt 15 aufweisen, mittels dessen das Spreizelement 7 entlang der Schenkachse 4 ver-stellbar ist. Der Betätigungsabschnitt 15 kann dabei an einem mit dem Spreizelement 7 zusammenwirkenden Stellelement 9, insbesondere einer Stellschraube (siehe Fig. 2), oder alternativ direkt an dem Spreizelement 7 ausgebildet sein (nicht dargestellt).

Der Betätigungsabschnitt 15 kann von außerhalb des Drehgelenkes 1 zugänglich oder hinter einer abnehmbaren Abdeckung 14 angeordnet sein.

In der dargestellten Ausführungsform der Fig. 3 ist die Einstellvorrichtung 5 eine Klemmvorrichtung, die die Gelenkteile 2, 3 in axialer Richtung gegen einander drückt. In einem anderen Anwendungsfall, der schematisch in Fig. 7 dargestellt ist, kann die Einstellvorrichtung 5 eine Zustellvorrichtung sein, die die Gelenkteile 2, 3 in axialer Richtung zueinander bewegt. Sowohl die Klemmkraft im ersten Anwendungsfall als auch die Zustellbewegung im zweiten Anwendungsfall werden durch eine mittels der Spreizeinrichtung 6 einstellbare Kraft bewirkt.

In Fig. 2 und 3 ist weiters zu sehen:
eine erste Klemmfläche 21, die an dem ersten Teil 11 der Einstellvorrichtung 5 ausgebildet ist, im Wesentlichen senkrecht zur Schwenkachse 4 steht und gegen den ersten Gelenkteil 2 anliegt, und
eine zweite Klemmfläche 22, die an dem zweiten Teil 12 der Einstellvorrichtung 5 ausgebildet ist, im Wesentlichen senkrecht zur Schwenkachse 4 steht und gegen den zweiten Gelenkteil 3 anliegt.

Die Gelenkteile 2, 3 sind somit zwischen der ersten Klemmfläche 21 und der zweiten Klemmfläche 22 angeordnet bzw. geklemmt. Die Klemmwirkung zwischen den zwei Klemmflächen 21, 22 entsteht durch die (in Fig. 2 und 4 dargestellten) gegensinnigen Kräfte F (Kraft und Gegenkraft).

Zusätzlich können die Gelenkteile 2, 3 durch zumindest eine Feder 20, vorzugsweise eine Tellerfeder, in axialer Richtung beaufschlagt sein. Die zumindest eine Feder 20 kann dabei - wie in Fig. 2 bzw. 3 dargestellt - zwischen dem ersten Teil 11 und dem zweiten Teil 12 der Einstellvorrichtung 5 angeordnet sein bzw. wirken.

An dieser Stelle sei bemerkt, dass die Erfindung nicht auf die dargestellten Ausführungsformen beschränkt ist. Das grundsätzliche Prinzip einer Spreizeinrichtung kann auf vielfältige Weise realisiert werden. Die durch das Spreizelement gezielt einstellbare Spreizkraft kann auf verschiedenste Weise umgesetzt bzw. umgelenkt werden. Die von der Einstellvorrichtung auf zumindest einen Gelenkteil wirkende Kraft muss nicht zwingender Weise parallel zur Schwenkachse sein. Denkbar sind auch Anwendungsfälle, bei denen die Kraft in radialer Richtung (d.h. senkrecht zur Schwenkachse) oder in einer Richtung mit radialer Komponente wirkt. Eine radial wirkende Spreizkraft der Spreizeinrichtung kann z.B. direkt oder indirekt auf eine Kraftübertragungsfläche, die keine oder keine nennenswerte Umlenkung der Kraft bewirkt, wirken. Die Gelenkteile können dadurch (auch radial) miteinander verspreizt werden, wodurch ebenfalls eine zwischen den Gelenkteilen wirkende Kraft erzeugt wird.

Die Kraftübertragungsfläche kann direkt oder indirekt (z.B. über Vermittlung von Zwischen- oder Übertragungselementen) mit der Spreizeinrichtung zusammenwirken.

Die Kraftübertragungsfläche könnte in einer Ausführungsform auch direkt an einem der Gelenkteile ausgebildet sein. Die Form und Orientierung der Kraftübertragungsfläche kann je nach Anwendungsfall und Richtung des Kraftflusses variieren. Auch können mehrere Kraftübertragungsflächen zur Übertragung bzw. Umlenkung der Spreizkraft vorgesehen sein.

Anstelle eines gesonderten Stellelementes könnte das Spreizelement selbst einen Stellabschnitt (z.B. Gewindeabschnitt) bzw. Betätigungsabschnitt aufweisen.

### Bezugszeichenaufstellung

- 1: Drehgelenk
- 2: Gelenkteil
- 3: Gelenkteil
- 4: Schwenkachse
- 5: Einstellvorrichtung
- 6: Spreizeinrichtung
- 7: Spreizelement
- 8: spreizbarer Abschnitt
- 9: Stellelement
- 10: Fernoptisches Instrument
- 11: erster Teil der Einstellvorrichtung 5
- 12: zweiter Teil der Einstellvorrichtung 5
- 13: hülsenförmiger Abschnitt
- 14: Abdeckung
- 15: Betätigungsabschnitt
- 16: Kraftübertragungsfläche
- 17: Kontaktfläche des Spreizelements 7
- 18: Spreizfinger
- 19: Kontaktfläche des Stellelements 9
- 20: Feder
- 21: erste Klemmfläche
- 22: zweite Klemmfläche
- 23: erster Tubus
- 24: zweiter Tubus
- 25: Fokussierbetätigungselement
- 26: Rastung

## Patentansprüche

1. Drehgelenk (1) für ein fernoptisches Instrument (10), insbesondere Binokular, umfassend:
- zumindest zwei um eine Schwenkachse (4) gegeneinander verschwenkbare Gelenkteile (2, 3), und
- eine Einstellvorrichtung (5) zum Einstellen des Schwenkwiderstandes und/oder einer Rastung (26) zwischen den Gelenkteilen (2, 3),
wobei die Einstellvorrichtung (5)
- eine Spreizeinrichtung (6) mit zumindest einem entlang der Schwenkachse (4) verstellbaren Spreizelement (7)
umfasst, **dadurch gekennzeichnet, dass** die Einstellvorrichtung (5)
- zumindest eine mit der Spreizeinrichtung (6) zusammenwirkende Kraftübertragungsfläche (16) zur Umsetzung der Spreizkraft der Spreizeinrichtung (6) in eine von der Einstellvorrichtung (5) auf zumindest einen Gelenkteil (2, 3) in Richtung der Schwenkachse (4) wirkende Kraft
umfasst, wobei die Kraftübertragungsfläche (16) eine relativ zur Schwenkachse (4) schräge oder gekrümmte Fläche umfasst und/oder einen in axialer Richtung abnehmenden Normalabstand zur Schwenkachse (4) aufweist.

2. Drehgelenk nach Anspruch 1, **dadurch gekennzeichnet, dass** die Spreizeinrichtung (6) zumindest einen durch das Spreizelement (7) spreizbaren, insbesondere aufspreizbaren Abschnitt (8) aufweist, der im gespreizten Zustand gegen die zumindest eine Kraftübertragungsfläche (16) drückt.

3. Drehgelenk nach Anspruch 2, **dadurch gekennzeichnet, dass** das Spreizelement (7) innerhalb des spreizbaren Abschnittes (8) angeordnet ist.

4. Drehgelenk nach Anspruch 2 oder 3, **dadurch gekennzeichnet, dass** der spreizbare Abschnitt (8) zumindest zwei, vorzugsweise zumindest vier Spreizfinger (18) aufweist, die um die Schwenkachse (4) angeordnet sind.

5. Drehgelenk nach einem der Ansprüche 2 bis 4, **dadurch gekennzeichnet, dass** die Kraftübertragungsfläche (16) radial außerhalb des spreizbaren Abschnittes (8) angeordnet ist.

6. Drehgelenk nach einem der vorhergehenden Ansprüche, **dadurch gekennzeichnet, dass** die Kraftübertragungsfläche (16) eine relativ zur Schwenkachse (4) schräge oder gekrümmte Fläche, die eine Keilfläche und/oder eine Kegelfläche und/oder eine Kugelfläche ist, umfasst.

7. Drehgelenk nach einem der vorhergehenden Ansprüche, **dadurch gekennzeichnet, dass** die Kraftübertragungsfläche (16) vorzugsweise symmetrisch um die Schwenkachse (4) angeordnet ist.

8. Drehgelenk nach einem der vorhergehenden Ansprüche, **dadurch gekennzeichnet, dass** die Kraftübertragungsfläche (16) ausgebildet ist, die durch die Spreizeinrichtung (6), insbesondere durch den spreizbaren Abschnitt (8), ausgebübte Kraft in eine Kraft und/oder Bewegung entlang der Schwenkachse (4) umzusetzen.

9. Drehgelenk nach einem der vorhergehenden Ansprüche, **dadurch gekennzeichnet, dass** die Einstellvorrichtung (5) einen ersten Teil (11) und einen zweiten Teil (12) umfasst, wobei die Spreizeinrichtung (6) an dem ersten Teil (11) ausgebildet ist und die Kraftübertragungsfläche (16) an dem zweiten Teil (12) ausgebildet ist.

10. Drehgelenk nach Anspruch 9, **dadurch gekennzeichnet,**
**dass** der erste Teil (11) und der zweite Teil (12) in Richtung der Schwenkachse (4) gegeneinander verstellbar sind
und/oder dass der erste Teil (11) und der zweite Teil (12) um die Schwenkachse (4) gegeneinander verdrehbar sind.

11. Drehgelenk nach Anspruch 9 oder 10, **dadurch gekennzeichnet, dass** der zweite Teil (12) einen hülsenförmigen Abschnitt (13) aufweist und dass die Spreizeinrichtung (6) zumindest teilweise in den hülsenförmigen Abschnitt (13) eingesetzt ist und dass die Kraftübertragungsfläche (16) an einer Innenwand des hülsenförmigen Abschnitts (13) ausgebildet ist.

12. Drehgelenk nach einem der Ansprüche 9 bis 11, **dadurch gekennzeichnet, dass** erste Teil (11) und der zweite Teil (12) die Gelenksachse für die Gelenkteile (2, 3) bilden und sich durch die Gelenkteile (2, 3) hindurch erstrecken.

13. Drehgelenk nach einem der Ansprüche 9 bis 12, **dadurch gekennzeichnet, dass** die Kraftübertragungsfläche (16) einen in axialer Richtung, in Richtung vom zweiten Teil (12) zum ersten Teil (11), abnehmenden Normalabstand zur Schwenkachse (4) aufweist.

14. Drehgelenk nach einem der vorhergehenden Ansprüche, **dadurch gekennzeichnet, dass** das Spreizelement (7) mit einem Stellelement (9), insbesondere einer Stellschraube, über Kontaktflächen (17, 19) zusammenwirkt, wobei die Kontaktfläche (17) des Spreizelementes (7) und/oder die Kontaktfläche (19) des Stellelementes (9) konvex, vorzugsweise kugelförmig, ausgebildet ist/sind.

15. Drehgelenk nach einem der vorhergehenden Ansprüche, **dadurch gekennzeichnet, dass** das Spreizelement (7) eine zur Schwenkachse (4) rotationssymmetrische Fläche, vorzugsweise eine kugelförmige oder konische Fläche, aufweist.

16. Drehgelenk nach einem der vorhergehenden Ansprüche, **dadurch gekennzeichnet, dass** das Spreizelement (7) eine Kugel ist.

17. Drehgelenk nach einem der vorhergehenden Ansprüche, **dadurch gekennzeichnet, dass** die Einstellvorrichtung (5) einen Betätigungsabschnitt (15) aufweist, mittels dessen das Spreizelement (7) entlang der Schenkachse (4) verstellbar ist, wobei vorzugsweise der Betätigungsabschnitt (15) an einem mit dem Spreizelement (7) zusammenwirkenden Stellelement (9), insbesondere einer Stellschraube, oder direkt an dem Spreizelement (7) ausgebildet ist.

18. Drehgelenk nach Anspruch 17, **dadurch gekennzeichnet, dass** der Betätigungsabschnitt (15) von außerhalb des Drehgelenkes (1) zugänglich ist oder hinter einer abnehmbaren Abdeckung (14) angeordnet ist.

19. Drehgelenk nach Anspruch 17 oder 18, **dadurch gekennzeichnet, dass** der Betätigungsabschnitt (15) an der Stirnseite einer Stellschraube ausgebildet ist und/oder dass der Betätigungsabschnitt (15) durch die Schwenkachse (4) geschnitten wird.

20. Drehgelenk nach einem der vorhergehenden Ansprüche, **dadurch gekennzeichnet, dass** die Einstellvorrichtung (5) eine Klemm- oder Zustellvorrichtung ist, wobei die Gelenkteile (2, 3) durch eine von der Klemm- oder Zustellvorrichtung auf die Gelenkteile (2, 3) in Richtung der Schwenkachse (4) wirkende, mittels der Spreizeinrichtung (6) einstellbare Kraft zueinander drückbar oder zueinander bewegbar sind.

21. Drehgelenk nach einem der vorhergehenden Ansprüche, **dadurch gekennzeichnet, dass** eine erste Klemmfläche (21), die vorzugsweise im Wesentlichen senkrecht zur Schwenkachse (4) steht, an dem ersten Teil (11) der Einstellvorrichtung (5) ausgebildet ist und eine zweite Klemmfläche (22), die vorzugsweise im Wesentlichen senkrecht zur Schwenkachse (4) steht, an dem zweiten Teil (12) der Einstellvorrichtung (5) ausgebildet ist, wobei die Gelenkteile (2, 3) zwischen der ersten Klemmfläche (21) und der zweiten Klemmfläche (22) angeordnet sind.

22. Drehgelenk nach einem der vorhergehenden Ansprüche, **dadurch gekennzeichnet, dass** die Gelenkteile (2, 3) durch zumindest eine Feder (20), vorzugsweise eine Tellerfeder, in axialer Richtung beaufschlagt sind, wobei vorzugsweise die zumindest eine Feder (20) zwischen dem ersten Teil (11) und dem zweiten Teil (12) der Einstellvorrichtung (5) angeordnet ist.

23. Drehgelenk nach einem der vorhergehenden Ansprüche, **dadurch gekennzeichnet, dass** durch die Einstellvorrichtung (5) der Reibungswiderstand zwischen den Gelenkteilen (2, 3) einstellbar ist.

24. Drehgelenk nach einem der vorhergehenden Ansprüche, **dadurch gekennzeichnet, dass** das Drehgelenk (1) eine Rastung (26) aufweist, durch die die Gelenkteile (2, 3) in verschiedenen Schwenkpositionen zueinander festlegbar sind, wobei durch die Einstellvorrichtung (5) der Rastwiderstand einstellbar ist und/oder die Rastteile der Rastung (26) in Eingriff bringbar sind.

25. Fernoptisches Instrument (10), insbesondere Binokular, mit einem ersten Tubus (23) und einem zweiten Tubus (24), die durch ein Drehgelenk (1) miteinander verbunden und gegeneinander verschwenkbar sind, **dadurch gekennzeichnet, dass** das Drehgelenk (1) nach einem der vorhergehenden Ansprüche ausgebildet ist.

26. Fernoptisches Instrument nach Anspruch 25, **dadurch gekennzeichnet, dass** die Einstellvorrichtung (5) einen Betätigungsabschnitt (15) aufweist, mittels dessen das Spreizelement (7) entlang der Schenkachse (4) verstellbar ist, und dass der Betätigungsabschnitt (15) von außerhalb des fernoptischen Instruments (10) zugänglich ist oder hinter einer abnehmbaren Abdeckung (14) angeordnet ist.

27. Fernoptisches Instrument nach Anspruch 25 oder 26, **dadurch gekennzeichnet, dass** die Gelenkteile (2, 3) eine Brücke zwischen dem ersten Tubus (23) und dem zweiten Tubus (24) bilden und dass das fernoptische Instrument (10) ein Fokussierbetätigungselement (25) aufweist, wobei der Betätigungsabschnitt (15) der Einstellvorrichtung (5) und das Fokussierbetätigungselement (25) an gegenüberliegenden Seiten der Brücke angeordnet sind und vorzugsweise durch die Schwenkachse (4) geschnitten werden.

## Claims

1. A pivot hinge (1) for a long-range optical instrument (10), in particular a binocular, comprising:
- at least two joint elements (2, 3) pivotable against each other about a pivot axis (4), and
- an adjustment device (5) for adjusting the pivot resistance and/or a detent (26) between the joint elements (2, 3),
wherein the adjustment device (5)
- comprises a spreader device (6) with at least one spreader element (7) adjustable along the pivot axis (4),
**characterized in that** the adjustment device (5)
- comprises at least one force transfer surface (16) interacting with the spreader device (6) to transfer the spreading force of the spreader device (6) into a force acting from the adjustment device (5) on at least one joint element (2, 3) in the direction of the pivot axis (4),
wherein the force transfer surface (16) comprises a surface inclined or curved relative to the pivot axis (4) and/or has a normal distance from the pivot axis (4) which decreases in the axial direction.

2. The pivot hinge according to claim 1, **characterized in that** the spreader device (6) has at least one section (8) spreadable, in particular spreadable apart, by the spreader element (7), said section (8) pressing against the at least one force transfer surface (16) in the spread state.

3. The pivot hinge according to claim 2, **characterized in that** the spreader element (7) is arranged within the spreadable section (8).

4. The pivot hinge according to claim 2 or 3, **characterized in that** the spreadable section (8) has at least two, preferably at least four, spreader fingers (18) that are arranged about the pivot axis (4).

5. The pivot hinge according to one of claims 2 to 4, **characterized in that** the force transfer surface (16) is arranged radially outside of the spreadable section (8).

6. The pivot hinge according to one of the preceding claims, **characterized in that** the force transfer surface (16) comprises surface slanted or curved relative to the pivot axis (4), which is a wedge surface and/or a conical surface and/or a spherical surface.

7. The pivot hinge according to one of preceding claims, **characterized in that** the force transfer surface (16) is preferably arranged symmetrically about the pivot axis (4).

8. The pivot hinge according to one of the preceding claims, **characterized in that** the force transfer surface (16) is formed to transfer the force applied by the spreader device (6), in particular by the spreadable section (8), into a force and/or motion along the pivot axis (4).

9. The pivot hinge according to one of the preceding claims, **characterized in that** the adjustment device (5) comprises a first part (11) and a second part (12), wherein the spreader device (6) is formed on the first part (11) and the force transfer surface (16) is formed on the second part (12).

10. The pivot hinge according to claim 9, **characterized in that**
the first part (11) and the second part (12) are adjustable against each other in the direction of the pivot axis (4)
and/or **in that** the first part (11) and the second part (12) are rotatable against each other about the pivot axis (4).

11. The pivot hinge according to claim 9 or 10, **characterized in that** the second part (12) has a sleeve-shaped section (13) and that the spreader device (6) is at least partially inserted into the sleeve-shaped section (13) and **in that** the force transfer surface (16) is arranged on an inner wall of the sleeve-shaped section (13).

12. The pivot hinge according to one of claims 9 to 11, **characterized in that** the first part (11) and the second part (12) form the pivot axis for the joint elements (2, 3) and extend through the joint elements (2, 3).

13. The pivot hinge according to one of claims 9 to 12, **characterized in that** the force transfer surface (16) has a normal distance to the pivot axis (4) tapering in axial direction, in the direction from the second part (12) to the first part (11).

14. The pivot hinge according to one of the preceding claims, **characterized in that** the spreader element (7) interacts via contact surfaces (17, 19) with a locking element (9), in particular a locking screw, wherein the contact surface (17) of the spreader element (7) and/or the contact surface (19) of the locking element (9) has/have a convex, preferably a spherical, form.

15. The pivot hinge according to one of the preceding claims, **characterized in that** the spreader element (7) has a rotationally symmetrical surface, preferably a spherical or conical surface, to the pivot axis (4).

16. The pivot hinge according to one of the preceding claims, **characterized in that** the spreader element (7) is a sphere.

17. The pivot hinge according to one of the preceding claims, **characterized in that** the adjustment device (5) has an actuating section (15) by means of which the spreader element (7) is adjustable along the pivot axis (4), wherein the actuating section (15) is preferably formed on a locking element (9), in particular a locking screw, that interacts with the spreader element (7) or said actuating section (15) is directly formed on the spreader element (7).

18. The pivot hinge according to claim 17, **characterized in that** the actuating section (15) is accessible from outside the pivot hinge (1) or is arranged behind a removable cover (14).

19. The pivot hinge according to claim 17 or 18, **characterized in that** the actuating section (15) is formed on the face of a locking screw and/or **in that** the actuating section (15) is intersected by the pivot axis (4).

20. The pivot hinge according to one of the preceding claims, **characterized in that** the adjustment device (5) is a clamping or feed device, wherein the joint elements (2, 3) can be pressed toward each other or can be moved toward each other by a force acting from the clamping or feed device on the joint elements (2, 3) in the direction of the pivot axis (4), said force being adjustable by the spreader device (6).

21. The pivot hinge according to one of the preceding claims, **characterized in that** the first clamping surface (21), which is preferably essentially arranged vertically to the pivot axis (4), is formed on the first part (11) of the adjustment device (5) and that a second clamping surface (22), which is preferably essentially arranged vertically to the pivot axis (4), is formed on the second part (12) of the adjustment device (5), wherein the joint elements (2, 3) are arranged between the first clamping surface (21) and the second clamping surface (22).

22. The pivot hinge according to one of the preceding claims, **characterized in that** the joint elements (2, 3) are loaded in axial direction with at least one spring (20), preferably a spring washer, wherein preferably at least one spring (20) is arranged between the first part (11) and the second part (12) of the adjustment device (5).

23. The pivot hinge according to one of the preceding claims, **characterized in that** the friction resistance between joint elements (2, 3) is adjustable by means of the adjustment device (5).

24. The pivot hinge according to one of the preceding claims, **characterized in that** the pivot hinge (1) has a detent (26) by means of which the joint elements (2, 3) are fixable relative to each other in different pivot positions, wherein the detent resistance is adjustable, and/or the detent elements of the detent (26) can be engaged, by means of the adjustment device (5).

25. A long-range optical instrument (10), in particular a binocular, having a first tube (23) and a second tube (24) that are connected with, and pivotable against, each other through a pivot hinge (1), **characterized in that** the pivot hinge (1) is formed according to one of the preceding claims.

26. The long-range optical instrument according to claim 25, **characterized in that** the adjustment device (5) has an actuating section (15) by means of which the spreader element (7) is adjustable along the pivot axis (4) and that the actuating section (15) is accessible from outside the long-range optical instrument (10) or is arranged behind a removable cover (14).

27. The long-range optical instrument according to claim 25 or 26, **characterized in that** the joint elements (2, 3) form a bridge between the first tube (23) and the second tube (24) and **in that** the long-range optical instrument (10) has a focus actuator element (25), wherein the actuating section (15) of the adjustment device (5) and the focus actuator element (25) are arranged on opposing sides of the bridge and are preferably intersected by the pivot axis (4).

## Revendications

1. Articulation rotative (1) pour un instrument téléoptique (10), plus particulièrement binoculaire, comprenant :
- au moins deux parties d'articulation (2, 3) pivotantes l'une par rapport à l'autre autour d'un axe de pivotement (4) et
- un dispositif de réglage (5) pour le réglage de la résistance au pivotement et/ou un crantage (26) entre les parties d'articulation (2, 3),
dans laquelle le dispositif de réglage (5)
- comprend un dispositif d'écartement (6) avec au moins un élément d'écartement (7) mobile le long de l'axe de pivotement (4)
**caractérisée en ce que** le dispositif de réglage (5)
- comprend au moins une surface de transmission de force (16), interagissant avec le dispositif d'écartement, pour la conversion de la force d'écartement (6) en une force exercée par le dispositif de réglage (5) sur au moins une partie d'articulation (2, 3) en direction de l'axe de pivotement (4),
dans laquelle la surface de transmission de force (16) comprend une surface inclinée par rapport à l'axe de pivotement (4) ou incurvée et/ou présente une distance normale par rapport à l'axe de pivotement (4), qui diminue dans la direction axiale.

2. Articulation rotative selon la revendication 1, **caractérisée en ce que** le dispositif d'écartement (6) comprend au moins une portion (8) pouvant être écartée, plus particulièrement expansée, par l'élément d'écartement (7), qui, dans l'état écarté, s'appuie contre l'au moins une surface de transmission de force (16).

3. Articulation rotative selon la revendication 2, **caractérisée en ce que** l'élément d'écartement (7) est disposé à l'intérieur de la portion expansible (8).

4. Articulation rotative selon la revendication 2 ou 3, **caractérisée en ce que** la portion expansible (8) comprend au moins deux, de préférence au moins quatre doigts d'écartement (18) qui sont disposés autour de l'axe de pivotement (4).

5. Articulation rotative selon l'une des revendications 2 à 4, **caractérisée en ce que** la surface de transmission de force (16) est disposée radialement à l'extérieur de la portion expansible (8).

6. Articulation rotative selon l'une des revendications précédentes, **caractérisée en ce que** la surface de transmission de force (16) comprend une surface inclinée par rapport à l'axe de pivotement (4) ou incurvée, qui est une surface cunéiforme et/ou une surface conique et/ou une surface sphérique.

7. Articulation rotative selon l'une des revendications précédentes, **caractérisée en ce que** la surface de transmission de force (16) est disposée de préférence de manière symétrique autour de l'axe de pivotement (4).

8. Articulation rotative selon l'une des revendications précédentes, **caractérisée en ce que** la surface de transmission de force (16) est conçue pour convertir la force exercée par le dispositif d'écartement (6), plus particulièrement par la portion expansible (8), en une force et/ou un mouvement le long de l'axe de pivotement (4).

9. Articulation rotative selon l'une des revendications précédentes, **caractérisée en ce que** le dispositif de réglage (5) comprend une première partie (11) et une deuxième partie (12), dans laquelle le dispositif d'écartement (6) est réalisée au niveau de la première partie (11) et la surface de transmission de force (16) est réalisée au niveau de la deuxième partie (12).

10. Articulation rotative selon la revendication 9, **caractérisée en ce que**
la première partie (11) et la deuxième partie (12) sont mobiles l'une par rapport à l'autre en direction de l'axe de pivotement (4),
et/ou **en ce que** la première partie (11) et la deuxième partie (12) sont rotatives l'une par rapport à l'autre autour de l'axe de pivotement (4).

11. Articulation rotative selon la revendication 9 ou 10, **caractérisée en ce que** la deuxième partie (12) comprend une portion en forme de douille (13) et **en ce que** le dispositif d'écartement (6) est inséré au moins partiellement dans la portion en forme de douille (13) et **en ce que** la surface de transmission de force (16) est réalisé au niveau d'une paroi interne de la portion en forme d'étui (13).

12. Articulation rotative selon l'une des revendications 9 à 11, **caractérisée en ce que** la première partie (11) et la deuxième partie (12) constituent l'axe d'articulation pour les parties d'articulation (2, 3) et s'étendent à travers les parties d'articulation (2, 3).

13. Articulation rotative selon l'une des revendications 9 à 12, **caractérisée en ce que** la surface de transmission de force (16) présente une distance normale par rapport à l'axe de pivotement (4), qui diminue de la deuxième partie (12) vers la première partie (11).

14. Articulation rotative selon l'une des revendications précédentes, **caractérisée en ce que** l'élément d'écartement (7) interagit avec un élément d'actionnement (9), plus particulièrement une vis d'actionnement, par l'intermédiaire de surfaces de contact (17, 19), dans laquelle la surface de contact (17) de l'élément d'écartement (7) et/ou la surface de contact (19) de l'élément d'actionnement (9) présente une forme convexe, de préférence sphérique.

15. Articulation rotative selon l'une des revendications précédentes, **caractérisée en ce que** l'élément d'écartement (7) comprend une surface à symétrie de rotation par rapport à l'axe de pivotement (4), de préférence une surface sphérique ou conique.

16. Articulation rotative selon l'une des revendications précédentes, **caractérisée en ce que** l'élément d'écartement (7) est une sphère.

17. Articulation rotative selon l'une des revendications précédentes, **caractérisée en ce que** le dispositif de réglage (5) comprend une portion d'actionnement (15) au moyen de laquelle l'élément d'écartement (7) peut être déplacé le long de l'axe de pivotement (4), dans laquelle, de préférence, la portion d'actionnement (15) est réalisée au niveau d'un élément d'actionnement (9) interagissant avec l'élément d'écartement (7), plus particulièrement une vis d'actionnement, ou est réalisée directement au niveau de l'élément d'écartement (7).

18. Articulation rotative selon la revendication 17, **caractérisée en ce que** la portion d'actionnement (15) est accessible de l'extérieur de l'articulation rotative (1) ou est disposée derrière un couvercle (14) amovible.

19. Articulation rotative selon la revendication 17 ou 18, **caractérisée en ce que** la portion d'actionnement (15) est réalisée au niveau de la face frontale d'une vis d'actionnement et/ou **en ce que** la portion d'actionnement (15) est coupée par l'axe de pivotement (4).

20. Articulation rotative selon l'une des revendications précédentes, **caractérisée en ce que** le dispositif de réglage (5) est un dispositif de serrage ou de positionnement, dans laquelle les parties d'articulation (2, 3) peuvent être comprimées l'une contre l'autre ou déplacées l'une vers l'autre par une force exercée par le dispositif de serrage ou de positionnement sur les parties d'articulation (2, 3) dans la direction de l'axe de pivotement (4) et réglable au moyen du dispositif d'écartement (6).

21. Articulation rotative selon l'une des revendications précédentes, **caractérisée en ce que** la première surface de serrage (21), qui est de préférence globalement perpendiculaire à l'axe de pivotement (4), est réalisée au niveau de la première partie (11) du dispositif de réglage (5) et une deuxième surface de serrage (22), qui est de préférence globalement perpendiculaire à l'axe de pivotement (4), est réalisée au niveau de la deuxième partie (12) du dispositif de réglage (5), dans laquelle les parties d'articulation (2, 3) sont disposées entre la première surface de serrage (21) et la deuxième surface de serrage (22).

22. Articulation rotative selon l'une des revendications précédentes, **caractérisée en ce que** les parties d'articulation (2, 3) sont sollicitées par au moins un ressort (20), de préférence une rondelle ressort, dans la direction axiale, dans laquelle de préférence l'au moins un ressort (20) est disposé entre la première partie (11) et la deuxième partie (12) du dispositif de réglage (5).

23. Articulation rotative selon l'une des revendications précédentes, **caractérisée en ce que** le dispositif de réglage (5) permet de régler la résistance à la friction entre les parties d'articulation (2, 3).

24. Articulation rotative selon l'une des revendications précédentes, **caractérisée en ce que** l'articulation rotative (1) comprend un crantage (26) à l'aide duquel les parties d'articulation (2, 3) peuvent être fixées les unes par rapport aux autres dans différentes positions de pivotement, dans laquelle le dispositif de réglage (5) permet de régler la résistance du crantage et/ou d'emboîter les parties crantées du crantage (26).

25. Instrument téléoptique (10), plus particulièrement binoculaire, avec un premier tube (23) et un deuxième tube (24), qui sont reliés entre eux et sont pivotants l'un par rapport à l'autre, **caractérisé en ce que** l'articulation rotative (1) est conçue selon l'une des revendications précédentes.

26. Instrument téléoptique selon la revendication 25, **caractérisé en ce que** le dispositif de réglage (5) comprend une portion d'actionnement (15) au moyen de laquelle l'élément d'écartement (7) peut être déplacé le long de l'axe de pivotement (4) et **en ce que** la portion d'actionnement (15) est accessible de l'extérieur de l'instrument téléoptique (10) ou est disposé derrière un couvercle amovible (14).

27. Instrument téléoptique selon la revendication 25 ou 26, **caractérisé en ce que** les parties d'articulation (2, 3) constituent un pont entre le premier tube (23) et le deuxième tube (24) et **en ce que** l'instrument téléoptique (10) comprend un élément d'actionnement de focalisation (25), dans lequel la portion d'actionnement (15) du dispositif de réglage (5) et l'élément d'actionnement de focalisation (25) sont disposés sur des côtés opposés du pont et de préférence sont coupés par l'axe de pivotement (4).
